# EUROPEAN PATENT APPLICATION

(11) **EP 0 111 291 A1**
(43) Date of publication of application: **20.06.1984**
(21) Application number: 83112251.0
(22) Date of filing: 06.12.1983
(51) Int. Cl.: G01N 1/06, B23B 27/00

(54) **Diamond cutting element for an ultramicrotomy knife**

(30) Priority: 08.12.1982 US 447754
(71) Applicant: E.I. DU PONT DE NEMOURS AND COMPANY, Wilmington Delaware 19898 (US)
(72) Inventor: Johnson, George Howard, Wilmington Delaware 19810 (US)
(74) Representative: von Kreisler, Alek, Dipl.-Chem.

(57) **Abstract**

57 A diamond cutting element is disclosed wherein the cutting edge is formed by a first and a second facet, wherein one facet is a cubic plane, the second facet is a dodecahedral plane, and the edge direction lies along a cubic direction in the diamond crystal structure.

## Description

### BACKGROUND OF THE INVENTION

This invention relates to a knife particularly suitable for use in an ultramicrotome and, in particular, to an ultramicrotomy knife having a cutting element formed from a material having the cubic diamond crystal structure, such as diamond, the cutting element having an edge formed by facets which are a cubic and a dodecahedral plane of the structure and in which the cutting edge lies along a cubic direction of the structure.

### DESCRIPTION OF THE PRIOR ART

It is now well known to utilize a diamond cutting element in an ultramicrotomy knife to effect the sectioning of a biological specimen using an ultramicrotome. United States Patent 3,060,781, issud ' to Fernandez-Moran Villalohos, discloses a diamond cutting tool useful for such a purpose. An ultramicrotomy knife using a diamond cutting tool such as that disclosed in the above-referenced patent is made by bonding small diamond chips in a metallic shank and grinding the diamonds to an extremely sharp edge with very smooth and wettable faces.

Diamord and glass knives have been used to slice ultrathin sections of embedded biological tissue or other materials for examination by an electron microscope. The embedded tissue block face has a typical length of 0.25 to 1.00 mm while the thickness of the sections is on the order of one hundred to two thousand Angstroms. The sections of embedded tissue that are produced can be distorted during the cutting process. These distortions can render the sections esthetically displeasing to the user, interfere with the interpretation of the electron micrograph, and/or completely destroy their usefulness for electron microscopy examination. Diamond knives provide unrivaled durability over glass knives. For a glass knife only ten to twenty sections may be cut before the glass knife must be remade. A diamond knife, on the other hand, is able to cut many thousands of sections before it must be resharpened.

Several desirable properties are important to the use of a diamond cutting element in an ultramicrotomy knife blade and in optimizing the manufacturing efficiency of the diamond cutting element. As noted above, for optimized performance an ultramicrotomy knife using a diamond cutting element should be able to cut up to many thousand ultrathin sections in the range of one hundred to two thousand Angstroms in thickness. To meet this performance standard it is important that the cutting element used in the knife have an extremely sharp edge (with an edge diameter less than or equal to one hundred Angstroms) that is free of physical defects. The facets must be extremely smooth and defect-free with the continuous presence of a significant concentration of surface oxygen or other species to improve wettability (hydrophilicity). For optimizing the manufacturing process the correct method and direction of grinding for the highest grinding rate is needed. This is dependent upon the size, shape and crystallographic orientation of the diamond starting slab (the amount of material to be removed and the fastest grinding rate allowed) and on the method used to mount the diamond slab into the metallic shank.

Accordingly, it is desirable to provide a diamond cutting element for use in an ultramicrotomy knife that exhibits microscopically smooth facets with a sharp edge. In addition, it is advantageous to provide a diamond cutting element which exhibits a durable edge with minimal susceptibility to physical defects by cleavage along the octahedral planes of the diamond crystal. Such a knife should be easily manufactured by providing a starting slab whose crystallographic orientation produces the fastest grinding rates for diamond. Further, the facets should exhibit the strongest bonding of hydrophillic species (for example, oxygen) to the facets and the least chemical reactivity to minimize pickup of dirt and debris.

### SUMMARY OF THE INVENTION

The present invention relates to a cutting. element formed of a material having the cubic diamond crystal structure, such as diamond, and to a method for producing the same, the cutting element being particularly suited for use as an ultramicrotomy knife. In accordance with this invention the geometrical boundaries of the cutting element are oriented precisely along three predetermined crystallographic directions of a diamond crystal.

The diamond cutting element has a first and second facet meeting to form a cutting edge. The first facet is a cubic plane and the second facet is a dodecahedral plane of the diamond crystal with the cutting edge being parallel to a cubic direction in the diamond crystal. The angle between the first and second facets is in the range from thirty to sixty degrees. Preferably the included angle is forty-five degrees. When mounted ir. a shank, the diamond cutting element in accordance with this invention forms an ultramicrotomy knife which exhibits the attributes believed desirable in such an instrument.

### BRIEF DESCRIPTION OF THE DRAWINGS

The invention-will be more fully understood from the following detailed description thereof taken in connection with the accompanying drawings which form a part of this application and in which:
Figure 1 is a highly stylized representation of an ultramicrotome for cutting ultrathin sections;
Figure 2 is a perspective view of an ultramicrotomy knife using a diamond cutting element embodying the teachings of the present invention;
Figure 3A is a perspective view of the crystal structure of a material, such as diamond, having a cubic diamond crystal structure while Figure 3B is a stylized plan view of the crystal planes of Figure 3A;
Figure 4 is a diagrammatic view of a cutting element in accordance with the present invention; and
Figure 5A is a pictorial representation of the most commonly occurring crystalline form of diamond, viz., an octahedron, shown with respect to a cubic cartesian coordinate system while Figure 5B is a plan view of a slab sawn from the octahedron of Figure 5A.

### DISCLOSURE OF THE INVENTION

Throughout the following disclosure similar reference characters refer to similar elements in all figures of the drawings.

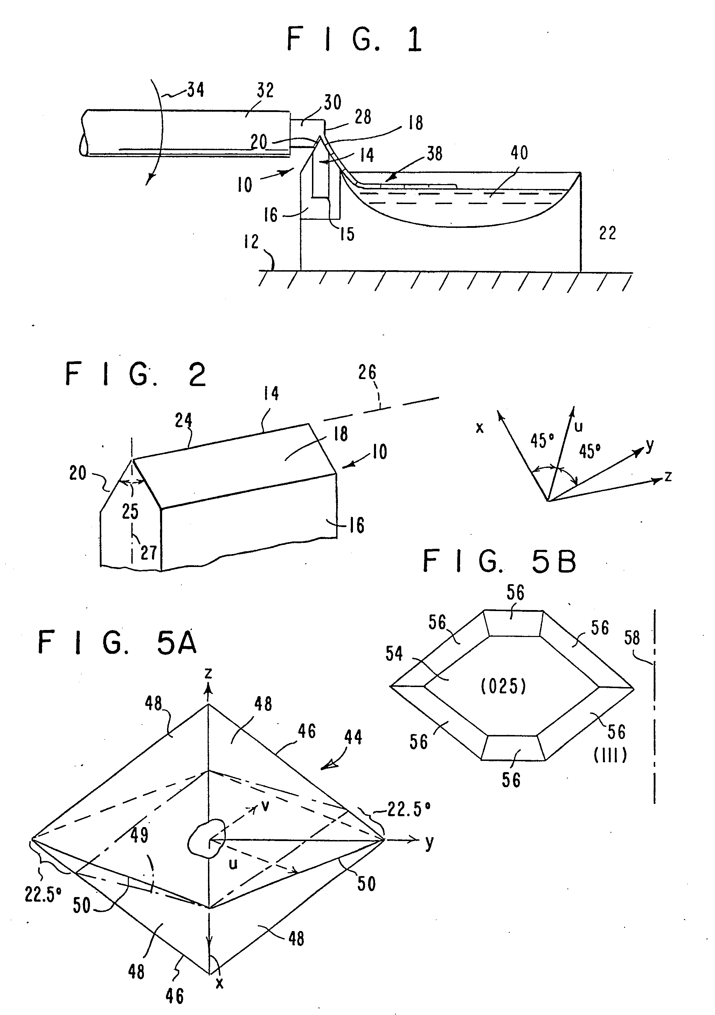

In Figures 1 and 2 an ultramicrotomy knife generally indicated by reference character 10 is shown as being supported on an ultramicrotomy stage 12. The ultramicrotomy knife 10 is comprised of a diamond cutting element 14 embodying the teachings of this invention mounted in a slot 15 provided in a shank 16. One facet 18 of the cutting element 14, when mounted to the stage 12, is disposed so as to face a boat 22 mounted on the stage 12. Hence, this facet 18 of the element 14 is referred to as the "boat side" facet. The other facet 20 of the element 14 is known as the "block side" facet. The facets 18 and 20 of the cutting element 10 meet and form an edge 24 (Figure 2) which has a predetermined reference direction 26.

In practice, the knife 10 formed of the diamond cutting element 14 in accordance with this invention mounted in the shank portion 16 is arranged to slice and collect a section 28 from a sample of tissue embedded in a sample block 30 as an ultramicrotomy specimen arm 32 to which the block 30 is attached is moved in a direction 34 with respect to the knife 10. The sections cut from the block 30 form a ribbon 38 which floats on the surface of liquid 40 (usually distilled water) carried within the boat 22. The individual sections are later retrieved and placed on a metal grid or other suitable deposition surface, all in accordance with well known ultramicrotomy principles and practices.

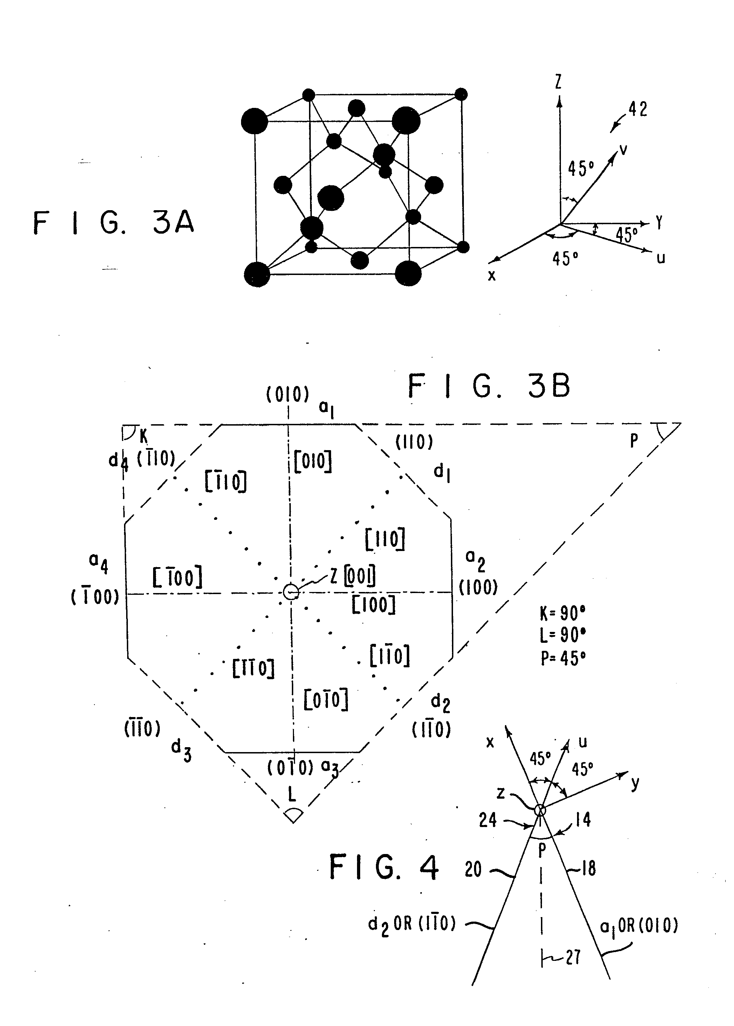

Shown in Figure 3A is a perspective view of the geometrical arrangement of atoms and chemical bonds which denote the cubic diamond crystal structure. Carbon, silicon, germanium, silicon and a or grey tin all are elements which exhibit this crystal structure. A diamond, as the word is colloquially used, refers to a material with the cubic diamond crystal structure wherein all atoms of the material are carbon that is, save for a few percent impurit:.es such as nitrogen, etc. It is in this sense that the phrase "all atoms of the material are carbon" is to be construed. The term "diamond" as used herein in reference to an ultramicrotomy knife and cutting element therefor is used in the colloquial sense. However it should be understood that a knife and cutting element therefor fabricated of any material having the cubic diamond crystal structure and sufficient hardness for the contemplated use falls within the scope of the present invention.

In Figure 3A the cubic diamond crystal structure is shown with reference to the cubic cartesian coordinate system 42 where the u axis is disposed at forty-five degrees to the x and y axes and the v axis is disposed at forty-five degrees to the x, y and z axes. Each carbon atom is tetrahedrally bonded to its nearest four neighbors with a bond angle of_{'}109°28'.

Crystallographic planes in cubic systems are described using the Miller Index System (h, k, 1) where the indices are.the lowest mutually consistent integer multiples of the plane's reciprocal intersections with the corresponding x, y and z axes. The corresponding crystallographic axis [h, k, 1] is perpendicular to the (h, k, 1) plane. The three elementary types of planes for the cubic diamond crystal structure are given in the following table.

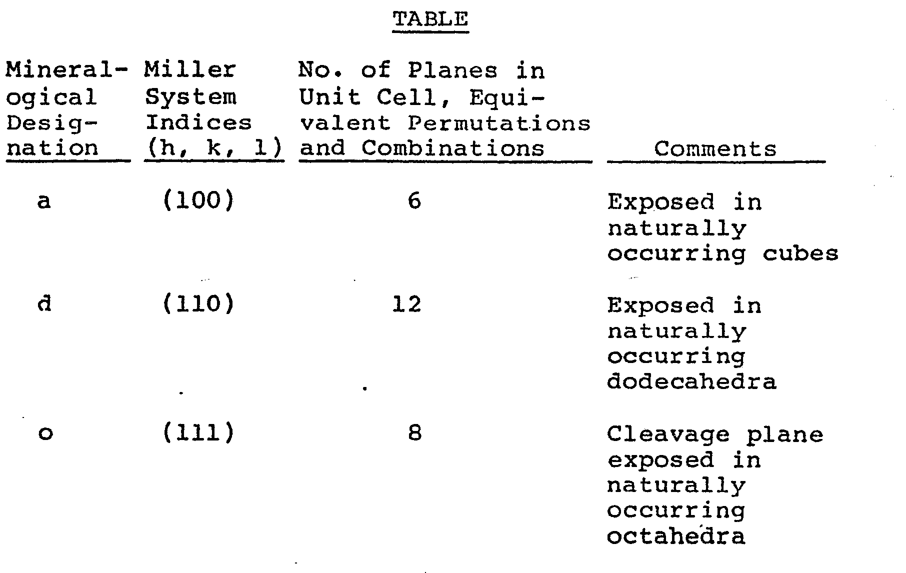

For example, the (100) plane is perpendicular to the [100] or x axis in the coordinate system 42, the (110) plane is perpendicular to the [110] or u axis, and the (111) plane is perpendicular to the [111] or v axis.

Figure 3B, which is a stylized plan view of the crystal planes of Figure 3A, illustrates the orientation of the various crystallographic axes and planes of the cubic diamond crystal structure in the x, y, and u plane of the cubic cartesian coordinate system 42. The z or [001] axis of the coordinate system 42 extends out of the plane of Figure 3B. Equivalent diagrams to Figure 3B with corresponding a-type and d-type planes could also be drawn where the x or [100] axis or the y or [010] axis extend out of the plane of the page.

As seen in Figure 3B, the crystal planes form an irregular octagon in the x, y, and u plane and are shown with various a-type or (100) planes (shown in solid lines) or d-type or (110)-type planes (shown in dotted lines) alternating. Each of the a-type or d-type planes is perpendiular to its associated a or d axis, (respectively shown in dot-dash and dotted lines). The axis out of the plane of Figure 3B is coincident with the [001] direction of the cubic diamond crystal. In equivalent figures the axis out of the page would be coincident with the [100] or [010] direction of the cubic diamond crystal, as the case may be. It should be noted that in the Miller Index System of notation the symbol 1 equals minus l.

In accordance with this invention the cutting element 14 (Figure 2) is formed of a gemstone quality single crystal diamond with the geometric boundaries of the cutting element 14 arranged such that the [001] axis of the crystal lies parallel to the reference direction 26 of the edge 24 of the cutting element 14. The [001] axis is chosen to lie parallel to the reference direction 26 because the corresponding (001) planes perpendicular to the [001] axis are known to have a much higher surface free energy (fracture energy) than the naturally occurring cleavage planes --(lll)-type planes-- or the dodecahedral planes --(110)-type planes. This choice helps to minimize physical defects and damage during the manufacturing and cutting processes and to maximize durability of the knife. In equivalent figures the [100] or [010] axes of the crystal would lie parallel to the reference direction 26 of the edge 24 of the cutting element 14 and would remain in the contemplation of this invention.

With reference to Figure 2 and 4, the boat side facet 18 of the cutting element 14 is defined as a'cubic plane, or (100)-type plane in the Miller Index, of the diamond crystal. As seen in Figure 4, the facet 18 of the cutting element 14 is the aₗ or (010) plane. The block side facet 20 of the cutting element 14 is defined as a dodecahedral, or (110)-type plane in the Miller Index, of the diamond crystal. In Figure 4 the facet 20 of the cutting element 14 is the d₂ or (110) plane. The included angle 25 between the facets 18 and 20 lies within the range from thirty degrees to sixty degrees and is preferably forty-five degrees. It should be noted that the preferred included angle where specified in this application may be within plus or minus fifteen degrees of the stated angle since the other facets defined for angles 25 different from forty-five degrees deviate very little from the the (100)-type or (110)-type planes. Of course it should be noted that other of the (100)-type or (110)-type planes may be selected such that the included angle is within the preferred range or is forty-five degrees. The facets 18 and 20 may be reversed and remain within the contemplation of this invention.

It should be noted that the cutting element produced by selecting both facets to each be (100)-type planes or (110)-type planes results in included angles similar to the angles K and L in Figure 3B--included angles of ninety degrees--and does not produce acceptable ultramicrotomy cutting elements. However, such cutting elements may be useful in other slicing or machining applications.

It is believed that when the geometrical boundaries of the cutting element l4 are oriented in the manner as discussed herein with respect to predetermined crystallographic planes of and directions in the diamond crystal an improved cutting element is provided.

The cutting element 14 in accordance with this invention may be fabricated from any naturally occurring diamond crystalline form. However, since the diamond octahedron is the most common of these forms it is discussed hereinafter. Thus, in accordance with the present invention a gemstone quality diamond octahedron 44 (Figure 5A) is used as the starting material. It is noted that diamond sawyers with skill can saw any predetermined slab from a diamond octahedron 44 as long as the sawing is started into a rib 46 and not into a face 48 of the octahedron 44. In accordance with the present invention the diamond octahedron is sawn along the (025)-type plane in the Miller Index. The saw line is indicated in Figure 5A by the dot-dash line denoted by the reference character 49. The (025) plane is the plane that intersects opposed ribs 46 of the octahedron at twenty-two and one-half degrees above and below the base 50 of the octahedron (Figure 5A). The sawing results in a slab 52 (Figure 5B) which is irregularly hexagonal in shape with the upper and lower surfaces 54 being the (025)-type planes of the diamond crystal. The lateral surfaces 56-of the slab 52 are the naturally occurring octahedral planes, --(lll)-type planes-- of the diamond crystal.

Selecting an edge direction that extends parallel to the reference line 58 (Figure 5B) the slab 52 is then mounted into the shank 16. The shank 16 is typically made of monel or other types of hard metals and the diamond is bonded using silver solder or other suitable, well-known bonding agents. To form the cutting edge 24 the shank 16 with the mounted slab is then exposed to process steps such as those disclosed in United States Patents 3,060,781; 3,190,044; and 3,190,047, all issued to Fernandez-Moran Villolobos. Each of these three listed United States Patents is hereby incorporated by reference herein.

The ultramicrotomy knife formed in the manner described above and using the diamond cutting element in accordance with the present invention provides (1) advantageous slab orientation, (2) position of lowest index planes as facets and (3) exposed crystal planes at various knife included angles in the range of thirty to sixty degrees which are optimized over all possible diamond orientations that have reasonably low axes of orientation (less than [250]-type or [211]-type axes) and that can be obtained by cleaving or sawing diamond octahedra, dodecahedra, cubes or other more complicated crystalline forms of diamond.

The slab 52 obtained by sawing along the (025)-type planes produces a cutting element with facets meeting at forty-five degrees included angle that are exactly (100)-type and (110)-type planes, respectively when the included angle 25 is symmetric about the centerline 27 in Figure 2 (i.e., equal half angles of twenty-two and one-half degrees). These facets (shown in Figures 2 and 4) have the fastest possible grinding rates (parallel to the edge direction 26) and best overall orientation symmetry for diamond.

At an included angle of forty-five degrees the facets shown in Figure 4 are microscopically smooth surfaces because they are the two lowest index planes of the diamond crystal, a cubic or (100)-type plane and a dodecahedral or (llO)-type plane. This is essentially true for the included angle 25 in the range of from thirty to sixty degrees since, as noted above, the other facets deviate very little from these planes.

The facets shown in Figure 4 give a reasonable density of sites (approximately 10¹⁵ sites per square centimeter) at which oxygen can bond but with the lowest chemical reactivity at each site so that pickup of dirt and debris during the use of the knife 10 in ultramicrotomy is minimized. Both of these factors contribute to the hydrophilicity (wettability) of the knife facets and are important in the knife's ultramicrotomy performance. The facets shown in Figure 4 have the strongest and most stable bonds to oxygen and other hydrophilic species.

The final factor to be considered in the effectiveness of a diamond cutting element is the existence of physical defects in the edge or facets due to cleavage. These can arise from several sources including natural cleavage planes --(lll)-type planes--, trigons, twinning or impurity defects in the starting slab. Since the latter causes are harder to isolate, more straightforward indicators of the physical defects in the edge or facets would be the number of natural cleavage planes occurring: (1) in the knife cross-sectional geometric - plane x, y, u in Figure 2; and (2) perpendicular to, parallel to, or at an angle between zero and ninety degrees in the plane of the knife edge direction 26. The occurrence of cleavage planes in these categories imparts a higher probability of edge or facet defects occurring during the manufacture or use of the knife. The crystallographic orientation shown in Figures 3B and 4 has cleavage planes in neither of the above two categories. The cleavage planes for the orientation shown in Figures 3B and 4 occur in spatial positions far removed from the cross sectional geometric plane or the knife edge plane. This implies the lowest possible probability of an edge or facet defect occurring during manufacture or use of the knife 10.

Those skilled in the art having the benefit of the teachings hereinabove set forth may effect numerous modifications thereto. These modifications are to be construed as lying within the scope of the present invention as defined in the appended claims. WHAT IS CLAIMED IS:

## Claims

1. A cutting element formed of a material having the cubic diamond crystal structure having a first and a second facet thereon and a cutting edge formed therebetween, wherein the first facet is a cubic plane the second facet is a dodecahedral plane and the cutting edge lies substantially parallel to a cubic direction in the structure with the angle included between the first and second facets in the range from thirty degrees to sixty degrees.

2. The cutting element of claim 1 wherein the included angle is forty-five degrees.

3. The cutting element of claim 1 wherein all atoms of the material are carbon.

4. The cutting element of claim 2 wherein all atoms of the material are carbon.

5. An ultramicrotomy knife comprising:
a shank; and,
a cutting element formed of a material having the cubic diamond crystal structure.mounted in the shank,. the cutting element having a first and a second facet and a cutting edge formed therebetween, wherein the first facet is a cubic plane the second facet is a dodecahedral plane and the cutting edge lies substantially parallel to a cubic direction in the structure with the angle included between the first and second facets in the range of from thirty degrees to sixty degrees.

6. The ultramicrotomy knife of claim 5 wherein the included angle is forty-five degrees.

7. The ultramicrotomy knife of claim 5 wherein all atoms of the material are carbon.

8. The ultramicrotomy knife of'claim 6 wherein all atoms of the material are carbon.

9. A method of making a cutting element from a material having a cubic diamond crystal structure comprising the steps of:
a) sawing from a crystalline form of the material a slab having exposed faces that are planes indicated as (250)-type planes in the Miller Index:
b) forming a cutting edge from the slab, the edge being formed between first and second facets such that one facet is a cubic plane the second facet is a dodecahedral plane and the edge lies substantially parallel to a cubic direction in the structure.

10. The method of claim 9 further comprising the step of mounting the cutting element produced as a result of steps a) and b) in a shank.

11. The method of claim 9 wherein all atoms of the material are carbon.

12. The method of claim 10 wherein all atoms of the material are carbon.
